(19) Europäisches Patentamt
European Patent Office
Office européen des brevets

(11) **EP 4 495 881 A1**

(12) **EUROPEAN PATENT APPLICATION**
published in accordance with Art. 153(4) EPC

(43) Date of publication:
**22.01.2025 Bulletin 2025/04**

(21) Application number: 23770651.0

(22) Date of filing: **09.03.2023**

(51) International Patent Classification (IPC):
*G06T 7/00* (2017.01)   *G06T 7/20* (2017.01)
*G06T 7/215* (2017.01)

(52) Cooperative Patent Classification (CPC):
**G06T 7/00; G06T 7/20; G06T 7/215**

(86) International application number:
**PCT/JP2023/009085**

(87) International publication number:
**WO 2023/176695 (21.09.2023 Gazette 2023/38)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**KH MA MD TN**

(30) Priority: **16.03.2022 JP 2022041142**

(71) Applicant: NEC Solution Innovators, Ltd.
Koto-ku, Tokyo 136-8627 (JP)

(72) Inventors:
• NAKABASHI, Isao
Tokyo 136-8627 (JP)
• ONO, Shohei
Tokyo 136-8627 (JP)
• KIYAMURA, Junichi
Tokyo 136-8627 (JP)

(74) Representative: **Betten & Resch**
**Patent- und Rechtsanwälte PartGmbB**
**Maximiliansplatz 14**
**80333 München (DE)**

(54) **MOVING BODY DETECTION DEVICE, MOVING BODY DETECTION METHOD, AND COMPUTER-READABLE RECORDING MEDIUM**

(57)   A moving-object detection apparatus 10 includes: a feature-point extracting unit 11 that extracts feature points from image data outputted from an image-capturing apparatus of a vehicle; an optical-flow specifying unit 12 that specifies an optical flow for each the feature points; a projection processing unit 13 that projects the optical flows onto a real-space coordinate system; a background-flow specifying unit 14 that specifies a background flow from the optical flows; a correction processing unit 15 that, based on a vector of the background flow, corrects starting-point positions of all of the projected optical flows, and eliminates an optical flow whose length has become equal to or shorter than a predetermined range; a clustering unit 16 that clusters optical flows that have not been eliminated, based on their positions; and a moving-object specification unit 17 that specifies a moving object in the image data using a result of the clustering.

Fig.1

**Description**

TECHNICAL FIELD

The present disclosure relates to a moving-object detection apparatus and a moving-object detection method for detecting moving objects from images shot by an image-capturing apparatus, and further relates to a computer readable recording medium that includes recorded thereon a program for realizing the moving-object detection apparatus and the moving-object detection method.

BACKGROUND ART

In recent years, in order to improve the safety of vehicles and their surroundings, a technique has been proposed of detecting moving objects near a vehicle based on image data from a camera attached to the vehicle and notifying the driver of approaching moving objects (see for example Patent Documents 1 and 2).

Specifically, Patent Documents 1 and 2 both disclose a moving-object detection apparatus installed in a vehicle. Furthermore, the moving-object detection apparatuses disclosed in Patent Documents 1 and 2 first extract feature points from image data output from a camera in units of frames, and compare feature points extracted from different frames to generate optical flows connecting the feature points.

Next, the moving-object detection apparatuses disclosed in Patent Documents 1 and 2 select optical flows fulfilling preset conditions. Two preset conditions are applied in doing so, and one condition is that extension lines obtained by extending the optical flows intersect at one focus of expansion within a predetermined error range. The other condition is that the external ratio of a line segment connecting the other end point of an optical flow and the focus of expansion when one end point of the optical flow is an externally dividing point is equal within a predetermined error range on the extension lines of the optical flows. Furthermore, the moving-object detection apparatus disclosed in Patent Document 1 detects a moving object from the selected optical flows.

Moving objects near a vehicle can be detected according to the moving-object detection apparatuses disclosed in Patent Documents 1 and 2; thus, by adopting a configuration such that moving objects are detected based on a video from a rear camera that shoots a video of the rear of a vehicle, for example, the driver can recognize vehicles located in the rear.

LIST OF RELATED ART DOCUMENTS

PATENT DOCUMENT

Patent Document 1: Japanese Patent Laid-Open Publication No. 2008-97126
Patent Document 2: Japanese Patent Laid-Open Publication No. 2011-43922

SUMMARY OF INVENTION

PROBLEMS TO BE SOLVED BY THE INVENTION

However, the above-described moving-object detection apparatuses disclosed in Patent Documents 1 and 2 detect a moving object by selecting optical flows that intersect at one focus of expansion. Thus, there is a problem with the above-described moving-object detection apparatuses disclosed in Patent Documents 1 and 2 that it is difficult to detect moving objects that are traveling alongside the host vehicle. Furthermore, there is another problem with the above-described moving-object detection apparatuses disclosed in Patent Documents 1 and 2 that objects constituting a part of the background, such as road signs, parked vehicles, and signboards, for example, are erroneously detected because such objects move relative to the host vehicle.

An example object of the present disclosure is to overcome the above-described problems and improve moving-object detection accuracy.

MEANS FOR SOLVING THE PROBLEMS

In order to achieve the above-described object, a moving-object detection apparatus includes:

a feature-point extracting unit that extracts feature points from image data output at a preset interval from an image-capturing apparatus attached to a vehicle;
an optical-flow specifying unit that specifies, for each of the extracted feature points, an optical flow of the feature point by comparing the latest image data and the image data output further back in the past compared to the latest image data;
a projection processing unit that projects the specified optical flows onto a real-space coordinate system in which the image-capturing apparatus is positioned at an origin;
a background-flow specifying unit that specifies, as a background flow, an optical flow of an object constituting a background among the projected optical flows;
a correction processing unit that, based on a vector of the background flow, corrects starting-point positions of all of the projected optical flows, and eliminates an optical flow whose length has become equal to or shorter than a predetermined range as a result of the correction;
a clustering unit that clusters optical flows that have not been eliminated, based on positions of the optical flows; and
a moving-object specification unit that specifies a moving object in the image data using a result of the clustering.

In order to achieve the above-described object, a moving-object detection method includes:

a feature-point extracting step of extracting feature points from image data output at a preset interval from an image-capturing apparatus attached to a vehicle;
an optical-flow specifying step of specifying, for each of the extracted feature points, an optical flow of the feature point by comparing the latest image data and the image data output further back in the past compared to the latest image data;
a projection processing step of projecting the specified optical flows onto a real-space coordinate system in which the image-capturing apparatus is positioned at an origin;
a background-flow specifying step of specifying, as a background flow, an optical flow of an object constituting a background among the projected optical flows;
a correction processing step of correcting, based on a vector of the background flow, starting-point positions of all of the projected optical flows, and eliminating an optical flow whose length has become equal to or shorter than a predetermined range as a result of the correction;
a clustering step of clustering optical flows that have not been eliminated, based on positions of the optical flows; and
a moving-object specification step of specifying a moving object in the image data using a result of the clustering.

In order to achieve the above-described object, a computer readable recording medium according to an example aspect of the invention is a computer readable recording medium that includes recorded thereon a program,
the program including instructions that cause the computer to carry out:

a feature-point extracting step of extracting feature points from image data output at a preset interval from an image-capturing apparatus attached to a vehicle;
an optical-flow specifying step of specifying, for each of the extracted feature points, an optical flow of the feature point by comparing the latest image data and the image data output further back in the past compared to the latest image data;
a projection processing step of projecting the specified optical flows onto a real-space coordinate system in which the image-capturing apparatus is positioned at an origin;
a background-flow specifying step of specifying, as a background flow, an optical flow of an object constituting a background among the projected optical flows;
a correction processing step of correcting, based on a vector of the background flow, starting-point positions of all of the projected optical flows, and eliminating an optical flow whose length has become equal to or shorter than a predetermined range as a result of the correction;
a clustering step of clustering optical flows that have not been eliminated, based on positions of the optical flows; and
a moving-object specification step of specifying a moving object in the image data using a result of the clustering.

ADVANTAGEOUS EFFECTS OF THE INVENTION

As described above, according to present disclosure, it is possible to improve moving-object detection accuracy.

BRIEF DESCRIPTION OF THE DRAWINGS

FIG. 1 is a configuration diagram illustrating the schematic configuration of the moving-object detection apparatus in the first example embodiment.

FIG. 2 is a block diagram illustrating a specific configuration of the moving-object detection apparatus in the example embodiment of the invention.

FIG. 3 is a diagram for describing feature-point optical-flow specification processing in the example embodiment.

FIG. 4 is a diagram for describing optical-flow projection processing in the example embodiment.

FIG. 5 is a diagram for describing background-flow specification processing in the example embodiment.

FIG. 6 is a diagram for describing correction processing in the example embodiment.

FIG. 7 is a diagram for describing optical-flow clustering processing in the example embodiment.

FIG. 8 is a diagram for describing moving-object relative-speed calculation processing in the example embodiment.

FIG. 9 is a flowchart illustrating the operations of the moving-object detection apparatus in the example embodiment.

FIG. 10 is a block diagram illustrating an example of a computer that realizes the moving-object detection apparatus according to the example embodiment.

EXAMPLE EMBODIMENT

(Example Embodiment)

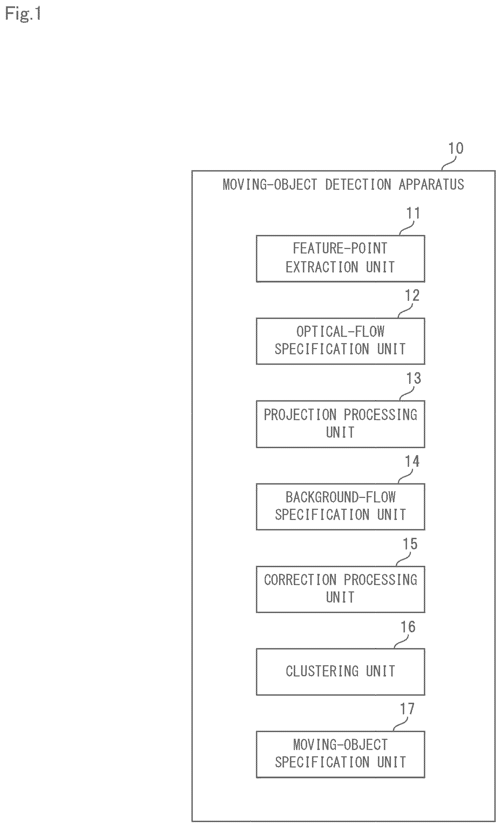

In the following, a moving-object detection apparatus in an example embodiment will be described with reference to FIGS. 1 to 10.

[Apparatus configuration]

First, a schematic configuration of the moving-object detection apparatus in first example embodiment will be described with reference to FIG. 1. FIG. 1 is a configuration diagram illustrating the schematic configuration of the moving-object detection apparatus in first example embodiment.

A moving-object detection apparatus 10 in the example embodiment, which is illustrated in FIG. 1, is an apparatus for detecting moving objects from image data output by an image-capturing apparatus attached to a vehicle. As illustrated in FIG. 1, the moving-object detection apparatus 10 includes a feature-point extraction unit 11, an optical-flow specification unit 12, a projection processing unit 13, a background-flow specification unit 14, a correction processing unit 15, a clustering unit 16, and a moving-object specification unit 17.

The feature-point extraction unit 11 extracts feature points from image data output at a preset interval from an image-capturing apparatus attached to a vehicle. The optical-flow specification unit 12 specifies, for each of the extracted feature points, an optical flow of the feature point by comparing the latest image data and the image data output further back in the past compared to the latest image data.

The projection processing unit 13 projects the specified optical flows onto a real-space coordinate system in which the image-capturing apparatus is positioned at an origin. The background-flow specification unit 14 specifies, as a background flow, an optical flow of an object constituting a background among the projected optical flows.

The correction processing unit 15, based on a vector of the background flow, corrects starting-point positions of all of the projected optical flows, and eliminates an optical flow whose length has become equal to or shorter than a predetermined range as a result of the correction.

The clustering unit 16 clusters optical flows that have not been eliminated by the correction processing unit 15, based on positions of the optical flows. The moving-object specification unit 17 specifies a moving object in the image data using a result of the clustering.

In the example embodiment, a background flow is eliminated as a result of starting-point positions of optical flows of feature points being corrected based on a background-flow vector in such a manner. Then, a moving object is specified based on a result of clustering of optical flows that have not been eliminated. Thus, according to the example embodiment, even moving objects traveling alongside the vehicle can be detected, and thus moving-object detection accuracy is improved.

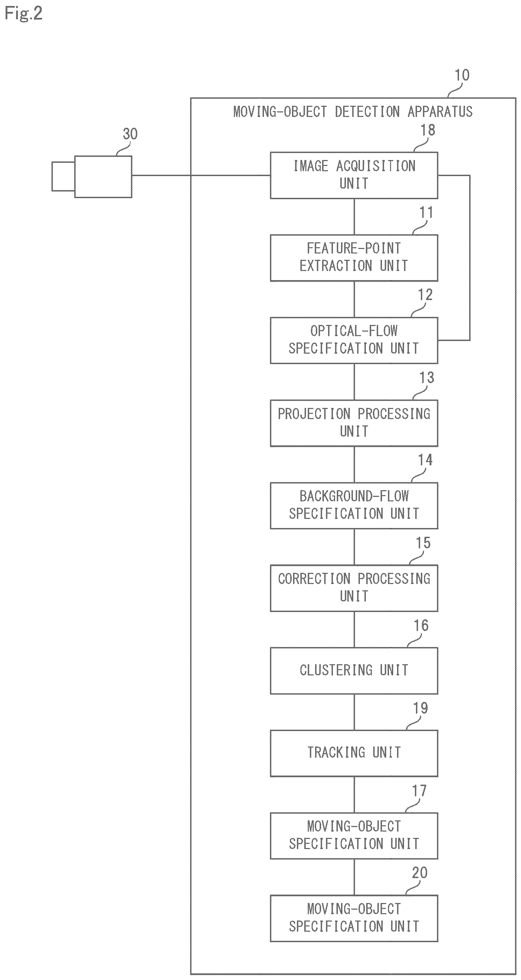

Next, the configuration of the moving-object detection apparatus in the present example embodiment will be described in further detail with reference to FIG. 2. FIG. 2 is a block diagram illustrating a specific configuration of the moving-object detection apparatus in the example embodiment of the invention.

As illustrated in FIG. 2, the moving-object detection apparatus 10 in the example embodiment is connected to an image-capturing apparatus 30, and is installed in a vehicle together with the image-capturing apparatus 30. The image-capturing apparatus 30 is a camera including a solid-state image sensor, and outputs image data to the moving-object detection apparatus 10 upon performing image shooting. In the example embodiment, the image-capturing apparatus 30 continuously outputs image data at a preset time interval (frame rate).

Furthermore, as illustrated in FIG. 2, in the present example embodiment, the moving-object detection apparatus 10 includes an image acquisition unit 18, a tracking unit 19, and a moving-object-speed calculation unit 20 in addition to the feature-point extraction unit 11, the optical-flow specification unit 12, the projection processing unit 13, the background-flow specification unit 14, the correction processing unit 15, the clustering unit 16, and the moving-object specification unit 17, which have been described above.

The image acquisition unit 18 acquires processing-target image data from the image-capturing apparatus 30. Specifically, image data of a color image is output from the image-capturing apparatus 30; thus, the image acquisition unit 18 first performs image conversion on the output image data to convert the color image into a grayscale image. Subsequently, the image acquisition unit 18 executes distortion correction on the image data as necessary, and then inputs the corrected image data to the feature-point extraction unit 11 and the optical-flow specification unit 12. Note that the distortion correction is performed if the shooting lens attached to the image-capturing apparatus 30 is a fisheye lens or the like, for example.

In the example embodiment, the feature-point extraction unit 11 first calculates an unbiased variance of luminance change using image data corresponding to a preset number of frames (ten frames, for example), and compares the calculated value with a threshold to determine whether each pixel is a motion pixel or a still pixel. Furthermore, the feature-point extraction unit 11 sets an area in which pixels determined as motion pixels are present as a motion area in which a moving object is present. Next, the feature-point extraction unit 11 extracts feature points in each motion area in the image data of the current frame using a conventional FAST algorithm, for example.

In the example embodiment, for example, the optical-flow specification unit 12 first compares feature points of the current frame and feature points of a past frame immediately preceding the current frame, and associates corresponding feature points with one another.

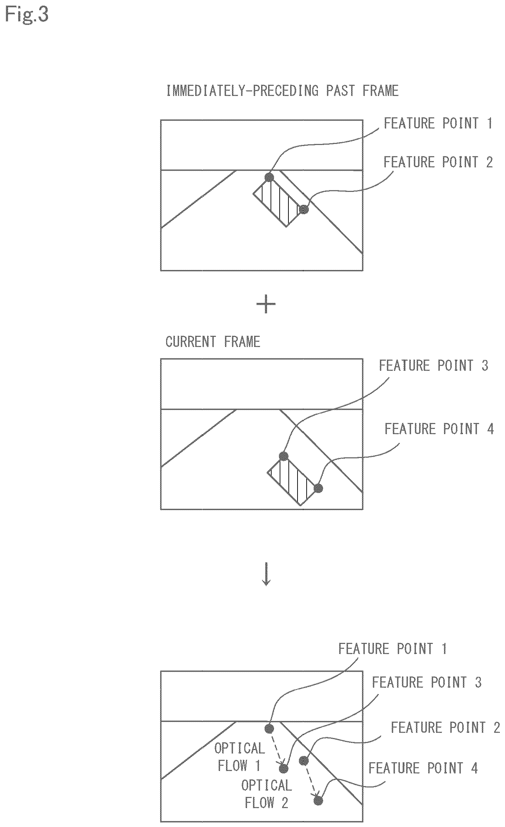

FIG. 3 is a diagram for describing feature-point optical-flow specification processing in the example embodiment. In the example in FIG. 3, the optical-flow specification unit 12 associates feature point 1 in the immediately-preceding past frame and feature point 3 in the current frame, and associates feature point 2 in the immediately-preceding past frame and feature point 4 in the current frame. Furthermore, the optical-flow specification unit 12 specifies optical flows by connecting the associated feature points with one another.

Specifically, the optical-flow specification unit 12 calculates similarity degrees between feature points, and associates, with one another, feature points for which the calculated similarity degree is higher than or equal to a threshold. A Hamming distance calculated from binary code generated according to the Rotated Brief method can be mentioned as an example of the similarity degree in this case.

Also, in order to reduce processing time, the optical-flow specification unit 12 may also divide an image, group each area obtained by the division and areas in the vicinity of the area as one group, and perform the association of feature points with one another and the specification of optical flows for each group.

In the example embodiment, by using camera parameters (for example, the installation position and angle of the image-capturing apparatus 30, a lens distortion coefficient, etc.), the projection processing unit 13 projects the specified optical flows onto a real-space world coordinate system in which the image-capturing apparatus is positioned at an origin.

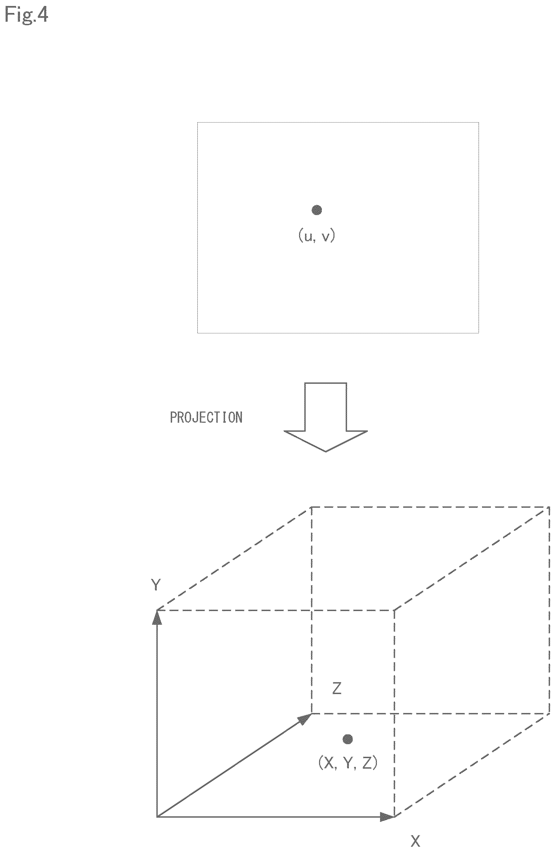

FIG. 4 is a diagram for describing optical-flow projection processing in the example embodiment. Specifically, as illustrated in FIG. 4, the projection processing unit 13 projects coordinates $(u, v)$ of an optical flow in an image coordinate system onto a world coordinate system (XYZ), which is a real-space coordinate system. Note that, because the vehicle in which the moving-object detection apparatus 10 is installed (hereinafter also referred to as "host vehicle") is present on the ground as are moving objects, Y in the world coordinate system is always set to 0 (zero) ($Y = 0$). Accordingly, the coordinates after projection are $(X, 0, Z)$.

Here, the projection processing will be described in detail. First of all, various parameters are defined as follows.

$(u, v)$: coordinates in image coordinate system to be converted into world coordinate system

$x_0$: x-axis coordinate before distortion correction in camera coordinate system

$y_0$: y-axis coordinate before distortion correction in camera coordinate system

$x$: x-axis coordinate after distortion correction in camera coordinate system

$y$: y-axis coordinate after distortion correction in camera coordinate system

$o_x$: X-axis coordinate of optical center in image coordinate system

$o_y$: Y-axis coordinate of optical center in image coordinate system

$f_w$: focal length (horizontal direction) in units of pixels

$f_w$ = (number of light-receiving elements in horizontal direction/horizontal-direction length of solid-state image sensor) $\times$ focal length [mm]

$f_h$: focal length (vertical direction) in units of pixels

$f_h$ = (number of light-receiving elements in vertical direction/vertical-direction length of solid-state image sensor) $\times$ focal length [mm]

$k_1, k_2, k_3, k_4, k_5, k_6, p_1, p_2$: camera distortion coefficients

$('u, 'v)$: coordinates after distortion correction in image coordinate system

H: bird's-eye transformation matrix
'X, 'Z: coordinates normalized by reciprocal of 'Y in world coordinate system
'Y: coefficient for denormalizing 'X, 'Z
X: X-axis coordinate in world coordinate system
Y: Y-axis coordinate in world coordinate system
Z: Z-axis coordinate in world coordinate system

Among the above-described parameters, $x_0$ and $y_0$ are represented by Math. 1 below. Furthermore, the projection processing unit 13 updates x and y by executing computation using Math. 2 below multiple times (five times, for example).

[Math. 1]

$$x_0 = x = \frac{(u - o_x)}{f_w}$$

$$y_0 = y = \frac{(v - o_y)}{f_h}$$

[Math. 2]

$$r^2 = x^2 + y^2$$

$$x = \left(x_0 - \left(2p_1 xy + p_2(r^2 + 2x^2)\right)\right) \times \frac{1 + k_4 r^2 + k_5 r^4 + k_6 r^6}{1 + k_1 r^2 + k_2 r^4 + k_3 r^6}$$

$$y = \left(y_0 - \left(2p_2 xy + p_1(r^2 + 2y^2)\right)\right) \times \frac{1 + k_4 r^2 + k_5 r^4 + k_6 r^6}{1 + k_1 r^2 + k_2 r^4 + k_3 r^6}$$

Subsequently, the projection processing unit 13 calculates ('u, 'v) by applying x and y that have been obtained to Math. 3 below. Furthermore, the projection processing unit 13 calculates X and Z by applying ('u, 'v) that have been calculated to Math. 4 and Math. 5 below. Thus, coordinates in an image are projected onto the world coordinate system.

[Math. 3]

$$\acute{u} = x \times f_w + o_x$$

$$\acute{v} = y \times f_h + o_y$$

[Math. 4]

$$\begin{bmatrix} \acute{X} \\ \acute{Z} \\ \acute{Y} \end{bmatrix} = H \begin{bmatrix} \acute{u} \\ \acute{v} \\ 1 \end{bmatrix}$$

[Math. 5]

$$X = \frac{\acute{X}}{\acute{Y}} \qquad Z = \frac{\acute{Z}}{\acute{Y}}$$

Furthermore, the bird's-eye transformation matrix H indicated in Math. 4 above is calculated using Math. 6 below. In Math. 6 below, M is an internal parameter matrix of the image-capturing apparatus 30, and is calculated using Math. 7 below. Furthermore, E is an external parameter matrix of the image-capturing apparatus 30, and is calculated using Math. 8 below.

[Math. 6]

$$H = (M \times E)^{-1}$$

[Math. 7]

$$M = \begin{bmatrix} f_w & 0 & o_x \\ 0 & f_h & o_y \\ 0 & 0 & 1 \end{bmatrix}$$

[Math. 8]

$$E = \begin{bmatrix} r_{11} & r_{13} & t_x \\ r_{21} & r_{23} & t_y \\ r_{31} & r_{33} & t_z \end{bmatrix}$$

In Math. 8 above, $r_{11}, r_{13}, r_{21}, r_{23}, r_{31}$, and r33 are the elements of the first and third columns of the rotation matrix R indicated in Math. 9 below. Furthermore, in Math. 8 above, $t_x$, $t_y$, and $t_z$ indicate the elements of the translation vector t indicated in Math. 10 below.

[Math. 9]

$$R = \begin{bmatrix} r_{11} & r_{12} & r_{13} \\ r_{21} & r_{22} & r_{23} \\ r_{31} & r_{32} & r_{33} \end{bmatrix}$$
$$= \begin{bmatrix} cos(roll) & -sin(roll) & 0 \\ sin(roll) & cos(roll) & 0 \\ 0 & 0 & 1 \end{bmatrix} \times \begin{bmatrix} 1 & 0 & 0 \\ 0 & cos(pitch) & -sin(pitch) \\ 0 & sin(pitch) & cos(pitch) \end{bmatrix}$$
$$\times \begin{bmatrix} cos(yaw) & 0 & sin(yaw) \\ 0 & 1 & 0 \\ -sin(yaw) & 0 & cos(yaw) \end{bmatrix}$$

Note that, in Math. 9 above, roll indicates a roll rotation angle [rad] of the image-capturing apparatus 30, pitch indicates the pitching rotation angle [rad] of the image-capturing apparatus 30, and yaw indicates the yawing rotation angle [rad] of the image-capturing apparatus 30.

[Math. 10]

$$t = \begin{bmatrix} t_x \\ t_y \\ t_z \end{bmatrix} = \begin{bmatrix} r_{11} & r_{12} & r_{13} \\ r_{21} & r_{22} & r_{23} \\ r_{31} & r_{32} & r_{33} \end{bmatrix} \times \begin{bmatrix} X \\ Y \\ Z \end{bmatrix}$$

In the example embodiment, the background-flow specification unit 14 specifies, from among the group of optical flows projected onto the world coordinate system, an optical flow of an object constituting a background as a background flow based on angle and length.

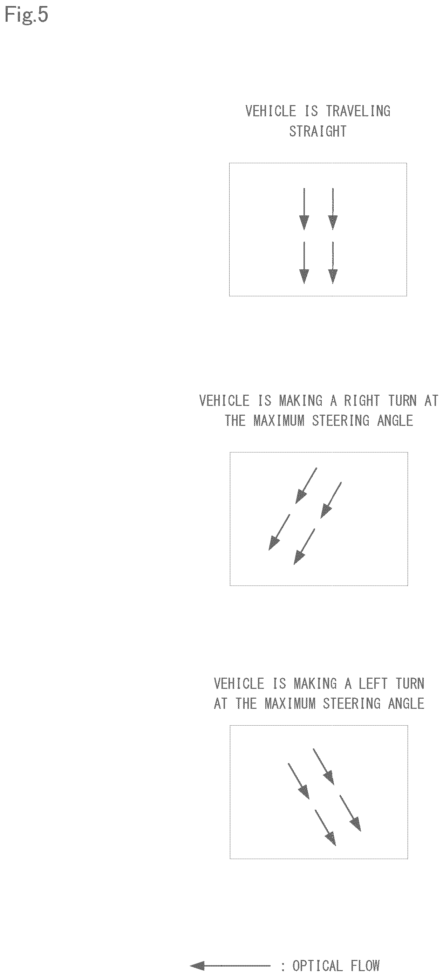

FIG. 5 is a diagram for describing background-flow specification processing in the example embodiment. As illustrated in FIG. 5, the background-flow direction changes when the direction of movement of the host vehicle changes. In the example in FIG. 5, background flows in a case in which the image-capturing apparatus 30 is installed facing the front of the host vehicle are illustrated by arrows.

The upper drawing in FIG. 5 illustrates background flows when the host vehicle is traveling straight. The middle drawing in FIG. 5 illustrates background flows when the host vehicle is making a right turn at the maximum steering angle. The lower drawing in FIG. 5 illustrates background flows when the host vehicle is making a left turn at the maximum steering angle. Because there is a limit to the tire steering angle of a vehicle, the background-flow direction changes only within a certain range. Furthermore, as illustrated in FIG. 5, background flows are oriented toward substantially the same direction and have substantially the same length in the world coordinate system.

Thus, the background-flow specification unit 14 generates a histogram in which the class intervals on the horizontal axis indicate optical-flow lengths, and specifies a background flow based on the generated histogram. Specifically, the background-flow specification unit 14 first extracts, from the group of all optical flows, a group of optical flows whose directions are within a certain range, and generates a histogram using the extracted group of optical flows. Furthermore, for example, the background-flow specification unit 14 obtains an average of vectors using optical flows belonging to the bin with the highest frequency and the bins on both sides thereof, and specifies the obtained average of vectors as a background flow.

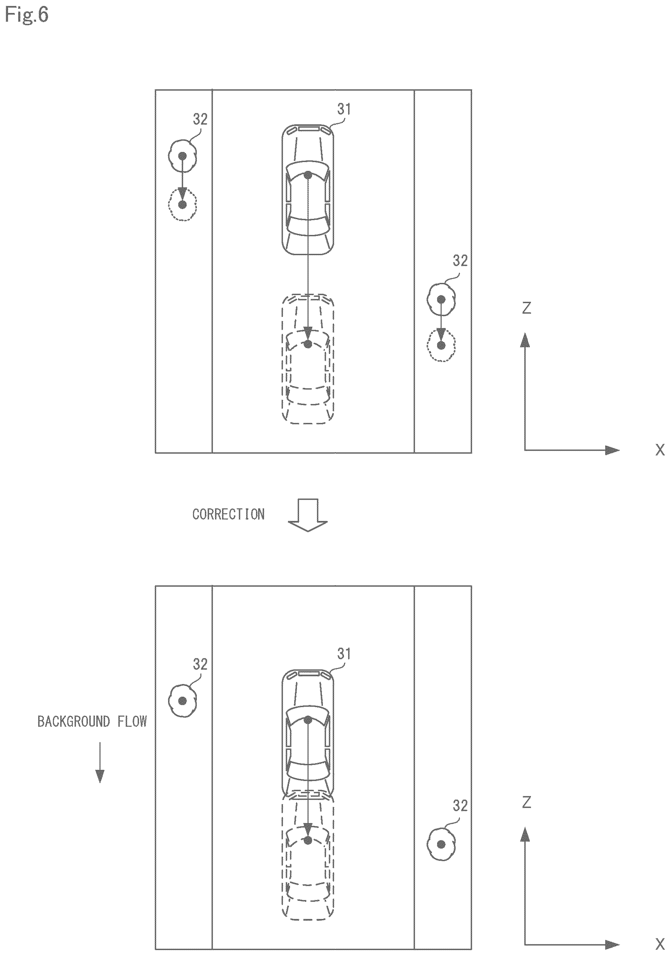

The background flow is a vector, and the direction thereof is completely opposite the direction of movement of the host vehicle, whereas the amount of movement thereof is equal to that of the host vehicle. Accordingly, in the example embodiment, the correction processing unit 15 obtains the direction and amount of movement of the vehicle based on the vector of the background flow. Furthermore, the correction processing unit 15 performs correction by moving, by the amount of movement of the vehicle and in the direction opposite the direction of movement of the vehicle, the starting positions of all projected optical flows. Specifically, because the background flow is a vector, the correction processing unit 15 adds the vector of the background flow to each optical flow. FIG. 6 is a diagram for describing correction processing in the example embodiment.

In FIG. 6, reference symbol 31 indicates a vehicle other than the host vehicle, and reference symbol 32 indicates roadside trees (object constituting a background). Furthermore, in FIG. 6, the solid lines indicate an image corresponding to the current frame, and the broken lines indicate the frame immediately preceding the current frame. Furthermore, in FIG. 6, the arrows indicate optical flows projected onto the world coordinate system. Furthermore, the upper drawing in FIG. 6 indicates a state before correction, and the lower drawing in FIG. 6 indicates a state after correction.

As illustrated in FIG. 6, because the roadside trees 32 are objects constituting the background, the background flow matches the optical flows of the roadside trees 32. Accordingly, when the correction processing unit 15 executes the correction processing, the amount of movement of the roadside trees 32 in the image is reduced to zero, and thus the lengths of the optical flows thereof are also reduced to zero, as illustrated in the lower drawing in FIG. 6.

Due to this, the correction processing unit 15 eliminates, from the group of optical flows, optical flows whose lengths have been reduced to zero as a result of the correction. Note that the optical flows that are eliminated may include optical flows whose lengths are not zero in a strict sense but are substantially reduced to zero. Furthermore, the range in which lengths are substantially reduced to zero is set in advance, as appropriate.

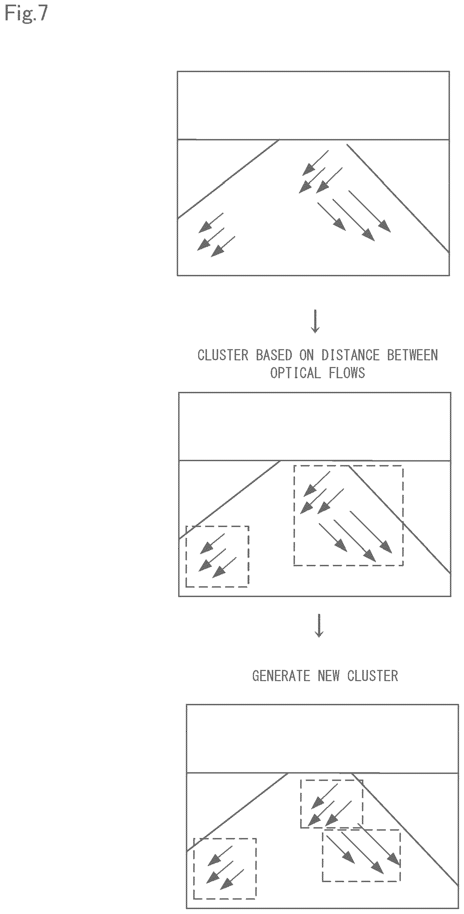

In the example embodiment, the clustering unit 16 executes clustering using the x-mean algorithm, for example, on optical flows that have not been eliminated by the correction processing unit 15. FIG. 7 is a diagram for describing optical-flow clustering processing in the example embodiment.

Specifically, as illustrated in the upper drawing in FIG. 7, the clustering unit 16 first specifies the positions of the optical flows that have not been eliminated by the correction processing unit 15. Furthermore, as illustrated in the middle drawing in FIG. 7, the clustering unit 16 calculates distances between the optical flows based on the specified positions, and executes clustering based on the calculated distances.

Next, in each cluster generated by the clustering, the clustering unit 16 specifies one or more optical flows whose length, position (coordinates in screen), and orientation deviate significantly from the average among the optical flows within the cluster. Because the specified optical flows cannot be regarded as deriving from the same moving object, the clustering unit 16 eliminates the specified optical flows from the original cluster and newly generates a cluster, as illustrated in the lower drawing in FIG. 7.

Also, if the positional relationship between multiple clusters and the lengths and orientations of optical flows belonging to the clusters fulfill preset conditions after the clustering unit 16 has executed the clustering, the clustering unit 16 may merge such clusters into one cluster. This is because it can be regarded that the optical flows belonging to such clusters derive from the same moving object.

Specifically, the clustering unit 16 first specifies two merge-candidate clusters based on the conditions that the clusters overlap one another, and the average length and orientation of optical flows within each cluster are similar between the clusters. Next, the clustering unit 16 performs a comparison, between the two clusters specified as merge candidates, of the orientations of optical flows in a central area (having a size of $20 \times 20$ pixels, for example) when the centers of the two clusters are connected, and merges the merge candidates if the orientations match in the clusters.

For each cluster obtained as a result of the clustering by the clustering unit 16, the tracking unit 19 determines whether or not the position of the cluster overlaps a position predicted from image data other than the latest image data.

Specifically, the tracking unit 19 compares a determination-target cluster in the current frame with determination-target clusters in a plurality of past frames (for example, the past six frames), and determines that the determination-target cluster overlaps if there is a match in a predetermined number or more past frames. Furthermore, the tracking unit 19 communicates clusters determined as overlapping to the moving-object specification unit 17.

Also, in the determination, the tracking unit 19 determines that clusters match not only in a case in which a cluster in the current frame and a cluster in a past frame completely match but also in a case in which the overlap between the two clusters is more than or equal to a certain percentage. Furthermore, in order to prevent matches between clusters corresponding to different moving objects, the tracking unit 19 may also perform the determination of whether or not clusters match after reducing the areas of determination-target clusters (to one fourth, for example).

Furthermore, the tracking unit 19 may also calculate average coordinates of coordinates of a cluster in the current frame and coordinates of clusters in past frames as coordinates of the cluster set as the determination target, and set the calculated average coordinates as the coordinates of the cluster set as the determination target.

Also, if the result of the comparison between a cluster in the current frame and clusters in multiple past frames is that the number of matching past frames is less than a threshold, the tracking unit 19 deletes the determination-target cluster because the possibility of erroneous detection is high. However, if it has been determined in the previous determination that the deleted cluster overlaps, the tracking unit 19 may also restore the deleted cluster.

In the example embodiment, the moving-object specification unit 17 specifies moving objects in the image based on clusters determined as overlapping by the tracking unit 19. Specifically, because optical flows of objects constituting the background have already been eliminated as a result of the correction processing by the correction processing unit 15, the clusters determined as overlapping by the tracking unit 19 all correspond to moving objects. Accordingly, for each cluster determined as overlapping, the moving-object specification unit 17 specifies a set of feature points from which the optical flows included in the cluster originated, and specifies the specified set of feature points as a moving object. Furthermore, because optical flows of moving objects traveling alongside the host vehicle are not reduced to zero as a result of the correction, the specified moving objects also include vehicles traveling alongside the host vehicle.

Furthermore, the moving-object specification unit 17 communicates information regarding the specified moving objects to the vehicle. The information communicated here include the position in the image, the direction of movement, the speed, etc., of each moving object. Note that the speed is calculated by the moving-object-speed calculation unit 20 described in the following.

The moving-object-speed calculation unit 20 calculates the speeds of moving objects using the amount of movement of the host vehicle obtained by the correction processing unit 15 from the vector of the background flow. Specifically, the moving-object-speed calculation unit 20 first calculates the speed of the host vehicle from the amount of movement of the host vehicle and the frame rate of the image-capturing apparatus 30. Next, the moving-object-speed calculation unit 20 calculates the speed of each moving object specified by the moving-object specification unit 17 relative to the host vehicle using the directions and lengths of the optical flows in the specified moving object. Furthermore, the moving-object-speed calculation unit 20 calculates the speed of the moving object from the calculated relative speed and the speed of the host vehicle.

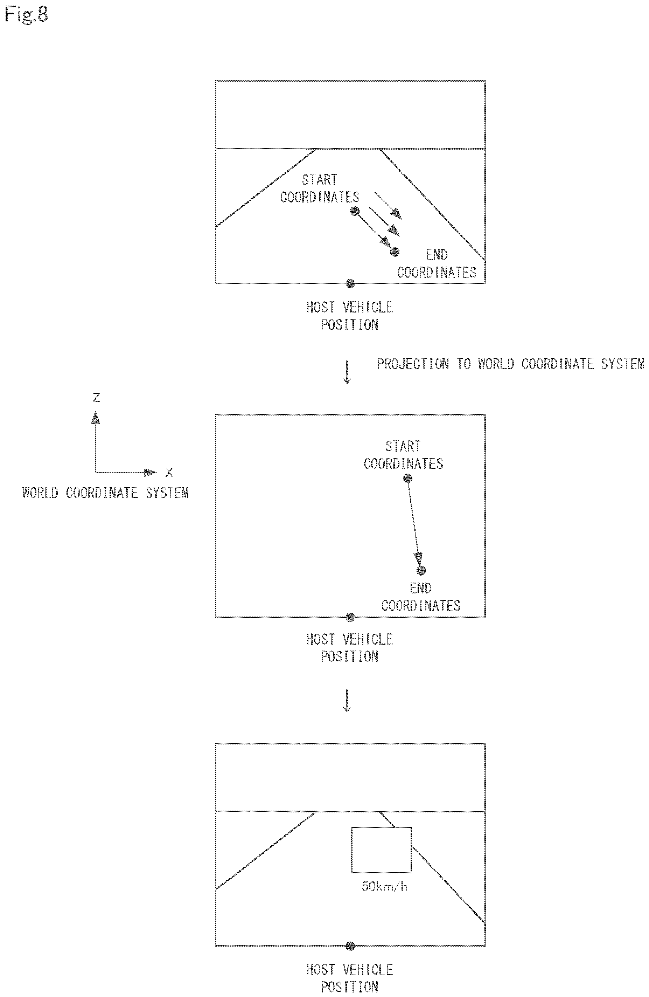

FIG. 8 is a diagram for describing moving-object relative-speed calculation processing in the example embodiment. Specifically, as illustrated in the upper drawing in FIG. 8, the moving-object-speed calculation unit 20 first specifies, in each of the current frame and the immediately-preceding past frame, coordinates of a point of the specified moving object that is closest to the host vehicle (bottom right or bottom left point of the moving object on the screen). Note that the coordinates specified in the immediately-preceding past frame and the coordinates specified in the current frame are respectively set as start coordinates and end coordinates. The moving-object-speed calculation unit 20 can also estimate the start coordinates from the average length and angle of the optical flows in the specified moving object.

Next, as illustrated in the middle drawing in FIG. 8, the moving-object-speed calculation unit 20 converts the start and end coordinates into coordinates in a real-space world coordinate system using camera parameters of the image-capturing apparatus 30. The coordinate conversion is performed by processing similar to the projection processing by the projection processing unit 13. Furthermore, from the coordinates after conversion, the moving-object-speed calculation unit 20 calculates a distance between the start and end coordinates in the real space, and sets the distance as the absolute movement distance of the moving object in the real space.

Furthermore, the moving-object-speed calculation unit 20 calculates the absolute speed of the moving object from the calculated absolute movement distance and the time from the immediately-preceding past frame to the current frame, and further calculates the speed of the moving object relative to the host vehicle from the calculated absolute speed of the moving object and the speed of the host vehicle. Note that the time from the immediately-preceding past frame to the current frame can be obtained from the frame rate. For example, the time would be 0.1 seconds if the frame rate is 10 fps.

[Apparatus operations]

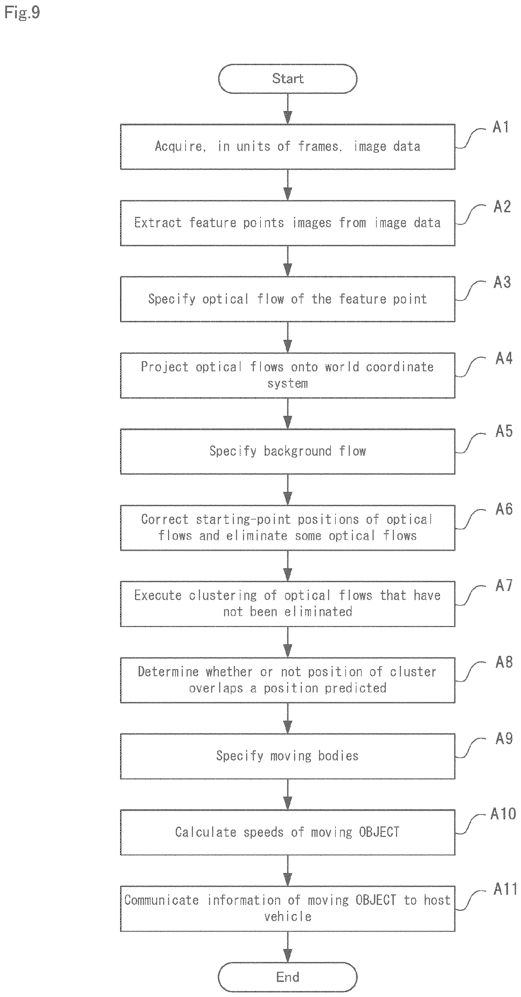

Next, operations of the moving-object detection apparatus 10 in the example embodiment will be described with reference to FIG. 9. FIG. 9 is a flowchart illustrating the operations of the moving-object detection apparatus in the example embodiment. FIG. 1 to 8 will be referred to as needed in the following description. Furthermore, in the example embodiment, a moving-object detection method is implemented by causing the moving-object detection apparatus to operate. Accordingly, the following description of the operations performed by the moving-object detection apparatus is substituted for the description of the moving-object detection method in the example embodiment.

As illustrated in FIG. 7, first, the image acquisition unit 18 acquires, in units of frames, image data output from the image-capturing apparatus 30 (step A1).

Specifically, in step A1, the image acquisition unit 18 first performs conversion into a grayscale image, distortion correction, etc., on acquired image data. Then, when the number of frames of image data acquired reaches a preset number of frames, the image acquisition unit 18 transfers the acquired image data to the feature-point extraction unit 11.

Next, the feature-point extraction unit 11 extracts feature points that are moving in the images from the image data acquired in step A1 (step A2).

Specifically, in step A2, the feature-point extraction unit 11 first calculates an unbiased variance of luminance change using image data corresponding to a preset number of frames (ten frames, for example), and determines whether each pixel is a motion pixel or a still pixel. Furthermore, the feature-point extraction unit 11 extracts feature points from a motion area in which pixels determined as motion pixels are present.

Next, the optical-flow specification unit 12 specifies, for each of the extracted feature points, an optical flow of the feature point by comparing the latest image data and image data output further back in the past compared to the latest image data (step A3).

Specifically, in step A3, the optical-flow specification unit 12 specifies optical flows by comparing feature points in a past frame immediately preceding the current frame and feature points in the current frame, associating corresponding feature points with one another, and connecting the associated feature points.

Next, by using camera parameters, the projection processing unit 13 projects the optical flows specified in step A3 onto a real-space world coordinate system in which the image-capturing apparatus is positioned at an origin (step A4).

Specifically, in step A4, the projection processing unit 13, for each specified optical flow, projects coordinates (u, v) of the optical flow in an image coordinate system onto a world coordinate system (XYZ), which is a real-space coordinate system, using Math. 1 to Math. 10 above.

Next, the background-flow specification unit 14 specifies, as a background flow, an optical flow of an object constituting a background among the optical flows projected in step A4 (step A5).

Specifically, in step A5, the background-flow specification unit 14 extracts, from the group of all optical flows, a group of optical flows whose directions are within a certain range, and generates a histogram using the extracted group of optical flows. Furthermore, for example, the background-flow specification unit 14 obtains an average of vectors using optical flows belonging to the bin with the highest frequency and the bins on both sides thereof, and specifies the obtained average of vectors as a background flow.

Next, based on a vector of the background flow, the correction processing unit 15 corrects starting-point positions of all of the optical flows projected in step A4, and eliminates an optical flow whose length has become equal to or shorter than a predetermined range as a result of correction (step A6).

Specifically, in step A6, the correction processing unit 15 obtains the direction and amount of movement of the vehicle based on the vector of the background flow. Furthermore, the correction processing unit 15 performs correction by moving, by the amount of movement of the vehicle and in the direction opposite the direction of movement of the vehicle, the starting positions of all projected optical flows. The lengths of background flows are reduced to substantially zero as a result of this correction.

Next, the clustering unit 16 executes clustering of the optical flows that have not been eliminated in step A6 based on the positions of the optical flows (step A7).

Specifically, as illustrated in the upper drawing in FIG. 7, the clustering unit 16 first calculates distances between the optical flows that have not been eliminated by the correction processing unit 15, and executes clustering based on the calculated distances. Next, in each cluster, the clustering unit 16 specifies one or more optical flows whose length, position (coordinates in screen), and orientation deviate significantly from the average among the optical flows within the cluster, and removes the specified optical flows from the original cluster to newly generate a cluster.

Next, for each cluster obtained as a result of step A7, the tracking unit 19 determines whether or not the position of the cluster overlaps a position predicted from image data other than the latest image data, and communicates clusters determined as overlapping to the moving-object specification unit 17 (step A8).

Specifically, in step A8, the tracking unit 19 compares a determination-target cluster in the current frame with determination-target clusters in a plurality of past frames (for example, the past six frames), and determines that the determination-target cluster overlaps if there is a match in a predetermined number of more past frames.

Next, the moving-object specification unit 17 specifies moving objects in the image based on clusters determined as overlapping in step A8 (step A9).

Specifically, in step A9, for each cluster determined as overlapping, the moving-object specification unit 17 specifies a set of feature points from which the optical flows included in the cluster originated, and specifies the specified set of feature points as a moving object.

Next, the moving-object-speed calculation unit 20 calculates the speeds of moving objects using the amount of movement of the host vehicle obtained from the vector of the background flow (step A10).

Specifically, in step A10, the moving-object-speed calculation unit 20 first calculates the speed of the host vehicle from the amount of movement of the host vehicle obtained in step A6 and the frame rate of the image-capturing apparatus 30. Next, the moving-object-speed calculation unit 20 calculates the speed of each moving object specified in step A9 relative to the host vehicle using the directions and lengths of the optical flows in the specified moving object. Furthermore, the moving-object-speed calculation unit 20 calculates the speed of the moving object from the calculated relative speed and the speed of the host vehicle.

Subsequently, the moving-object specification unit 17 communicates, to the host vehicle, the position in the image, the direction of movement, and the speed of each moving object specified in step A9 as information regarding the moving object (step A11).

[Effects of embodiment]

As described above, in the present example embodiment, a background flow is eliminated by correcting the starting-point positions of optical flows of feature points based on a background-flow vector. Subsequently, moving objects are specified from optical flows that have not been eliminated, and the specified moving objects also include vehicles traveling alongside the host vehicle because optical flows of moving objects traveling alongside the host vehicle are not eliminated by the correction. Thus, according to the example embodiment, even moving objects traveling alongside the vehicle can be detected, and thus moving-object detection accuracy is improved.

[Program]

It suffices for a program in the example embodiment to be a program that causes a computer to carry out steps A1 to A11 illustrated in FIG. 9. By installing this program on a computer and executing the program, the moving-object detection apparatus 10 and the moving-object detection method in the example embodiment can be realized. In this case, a processor of the computer functions and performs processing as the feature-point extraction unit 11, the optical-flow specification unit 12, the projection processing unit 13, the background-flow specification unit 14, the correction processing unit 15, the clustering unit 16, the moving-object specification unit 17, the image acquisition unit 18, the tracking unit 19, and the moving-object-speed calculation unit 20.
As examples of the computer, an onboard computer, a general-purpose personal computer (PC), a smartphone, a tablet-type terminal device, etc., can be mentioned. The program in the example embodiment may be executed by a computer system formed by a plurality of computers. In this case, for example, the computers may each function and perform processing as the feature-point extraction unit 11, the optical-flow specification unit 12, the projection processing unit 13, the background-flow specification unit 14, the correction processing unit 15, the clustering unit 16, the moving-object specification unit 17, the image acquisition unit 18, the tracking unit 19, or the moving-object-speed calculation unit 20.

[Physical Configuration]

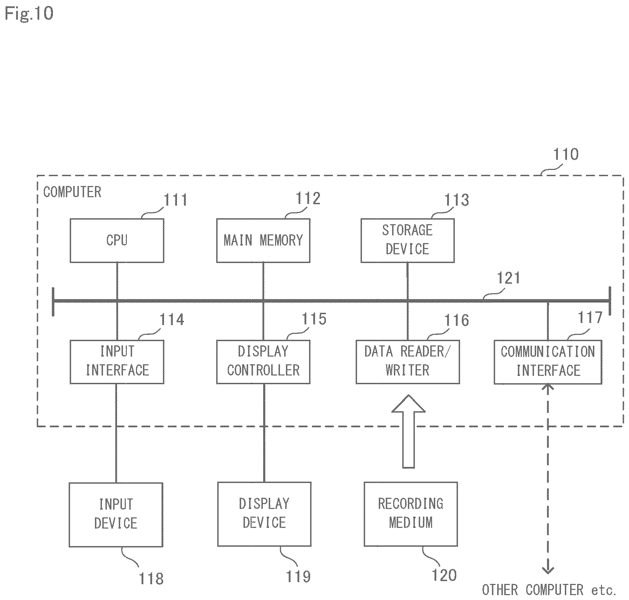

Here, a computer that realizes the moving-object detection apparatus 10 by executing the program in the example embodiment will be described with reference to FIG. 10. FIG. 10 is a block diagram illustrating one example of a computer for realizing the moving-object detection apparatus in the example embodiment.
As illustrated in FIG. 10, a computer 110 includes a CPU (Central Processing Unit) 111, a main memory 112, a storage device 113, an input interface 114, a display controller 115, a data reader/writer 116, and a communication interface 117. These components are connected in such a manner that they can perform data communication with one another via a bus 121.
The computer 110 may include a GPU (Graphics Processing Unit) or an FPGA (Field-Programmable Gate Array) in addition to the CPU 111, or in place of the CPU 111. In this case, the GPU or the FPGA can execute the program according to the example embodiment.
The CPU 111 deploys the program according to the example embodiment, which is composed of a code group stored in the storage device 113 to the main memory 112 and carries out various types of calculation by executing the codes in a predetermined order. The main memory 112 is typically a volatile storage device, such as a DRAM (dynamic random-access memory).
Also, the program according to the example embodiment is provided in a state where it is stored in a computer-readable recording medium 120. Note that the program according to the example embodiment may be distributed over the Internet connected via the communication interface 117.
Also, specific examples of the storage device 113 include a hard disk drive and a semiconductor storage device, such as a flash memory. The input interface 114 mediates data transmission between the CPU 111 and an input device 118, such as a keyboard and a mouse. The display controller 115 is connected to a display device 119, and controls display on the display device 119.
The data reader/writer 116 mediates data transmission between the CPU 111 and the recording medium 120, reads out the program from the recording medium 120, and writes the result of processing in the computer 110 to the recording medium 120. The communication interface 117 mediates data transmission between the CPU 111 and another computer.

Specific examples of the recording medium 120 include: a general-purpose semiconductor storage device, such as CF (CompactFlash®) and SD (Secure Digital); a magnetic recording medium, such as a flexible disk; and an optical recording medium, such as a CD-ROM (Compact Disk Read Only Memory).

Note that the moving-object detection apparatus 10 according to the example embodiment can also be realized by using items of hardware that respectively correspond to the components rather than the computer in which the program is installed. Furthermore, a part of the moving-object detection apparatus 10 may be realized by the program, and the remaining part of the moving-object detection apparatus 10 may be realized by hardware. In the example embodiment, the computer is not limited to the computer illustrated in FIG. 10.

A part or an entirety of the above-described example embodiment can be represented by (Supplementary Note 1) to (Supplementary Note 12) described below but is not limited to the description below.

(Supplementary Note 1)

A moving-object detection apparatus includes:

a feature-point extracting unit that extracts feature points from image data output at a preset interval from an image-capturing apparatus attached to a vehicle;
an optical-flow specifying unit that specifies, for each of the extracted feature points, an optical flow of the feature point by comparing the latest image data and the image data output further back in the past compared to the latest image data;
a projection processing unit that projects the specified optical flows onto a real-space coordinate system in which the image-capturing apparatus is positioned at an origin;
a background-flow specifying unit that specifies, as a background flow, an optical flow of an object constituting a background among the projected optical flows;
a correction processing unit that, based on a vector of the background flow, corrects starting-point positions of all of the projected optical flows, and eliminates an optical flow whose length has become equal to or shorter than a predetermined range as a result of the correction;
a clustering unit that clusters optical flows that have not been eliminated, based on positions of the optical flows; and
a moving-object specification unit that specifies a moving object in the image data using a result of the clustering.

(Supplementary Note 2)

The moving-object detection apparatus according to supplementary note **1,**
wherein the correction processing unit performs the correction by obtaining a direction and amount of movement of the vehicle based on the vector of the background flow, and moving, by the amount of movement and in a direction opposite the direction of movement, the starting-point positions of all of the projected optical flows.

(Supplementary Note 3)

The moving-object detection apparatus according to supplementary note 2 further comprising
moving-object-speed calculation unit for calculating a speed of the moving object using the amount of movement of the vehicle obtained based on the vector of the background flow.

(Supplementary Note 4)

The moving-object detection apparatus according to any one of supplementary notes 1 to 3 further comprising

tracking unit for, for each cluster obtained as a result of the clustering, determining whether or not a position of the cluster overlaps a position predicted from image data other than the latest image data,
wherein the moving-object specification unit specifies a moving object in an image based on a cluster determined as overlapping.

(Supplementary Note 5)

A moving-object detection method includes:

a feature-point extracting step of extracting feature points from image data output at a preset interval from an image-capturing apparatus attached to a vehicle;

an optical-flow specifying step of specifying, for each of the extracted feature points, an optical flow of the feature point by comparing the latest image data and the image data output further back in the past compared to the latest image data;

a projection processing step of projecting the specified optical flows onto a real-space coordinate system in which the image-capturing apparatus is positioned at an origin;

a background-flow specifying step of specifying, as a background flow, an optical flow of an object constituting a background among the projected optical flows;

a correction processing step of correcting, based on a vector of the background flow, starting-point positions of all of the projected optical flows, and eliminating an optical flow whose length has become equal to or shorter than a predetermined range as a result of the correction;

a clustering step of clustering optical flows that have not been eliminated, based on positions of the optical flows; and

a moving-object specification step of specifying a moving object in the image data using a result of the clustering.

(Supplementary Note 6)

The moving-object detection method according to supplementary note 5,
wherein, in the correction processing step, correction is performed by obtaining a direction and amount of movement of the vehicle based on the vector of the background flow, and moving, by the amount of movement and in a direction opposite the direction of movement, the starting-point positions of all of the projected optical flows.

(Supplementary Note 7)

The moving-object detection method according to supplementary note 6 further comprising
a moving-object-speed calculation step of calculating a speed of the moving object using the amount of movement of the vehicle obtained based on the vector of the background flow.

(Supplementary Note 8)

The moving-object detection method according to any one of supplementary notes 5 to 7 further comprising

a tracking step of, for each cluster obtained as a result of the clustering, determining whether or not a position of the cluster overlaps a position predicted from image data other than the latest image data,

wherein, in the moving-object specification step, a moving object in an image is specified based on a cluster determined as overlapping.

(Supplementary Note 9)

A computer readable recording medium according to an example aspect of the invention is a computer readable recording medium that includes recorded thereon a program,
the program including instructions that cause the computer to carry out:

a feature-point extracting step of extracting feature points from image data output at a preset interval from an image-capturing apparatus attached to a vehicle;

an optical-flow specifying step of specifying, for each of the extracted feature points, an optical flow of the feature point by comparing the latest image data and the image data output further back in the past compared to the latest image data;

a projection processing step of projecting the specified optical flows onto a real-space coordinate system in which the image-capturing apparatus is positioned at an origin;

a background-flow specifying step of specifying, as a background flow, an optical flow of an object constituting a background among the projected optical flows;

a correction processing step of correcting, based on a vector of the background flow, starting-point positions of all of the projected optical flows, and eliminating an optical flow whose length has become equal to or shorter than a predetermined range as a result of the correction;

a clustering step of clustering optical flows that have not been eliminated, based on positions of the optical flows; and

a moving-object specification step of specifying a moving object in the image data using a result of the clustering.

(Supplementary Note 10)

The computer readable recording medium according to supplementary note 9,
wherein, in correction processing step, correction is performed by obtaining a direction and amount of movement of the vehicle based on the vector of the background flow, and moving, by the amount of movement and in a direction opposite the direction of movement, the starting-point positions of all of the projected optical flows.

(Supplementary Note 11)

The computer readable recording medium according to supplementary note 10,

wherein the program further includes instructions that causes the computer to carry out;
a moving-object-speed calculation step of calculating a speed of the moving object using the amount of movement of the vehicle obtained based on the vector of the background flow.

(Supplementary Note 12)

The computer readable recording medium according to any one of supplementary notes 9 to 11,

wherein the program further includes instructions that causes the computer to carry out;
a tracking step of, for each cluster obtained as a result of the clustering, determining whether or not a position of the cluster overlaps a position predicted from image data other than the latest image data,
wherein, in the moving-object specification step, a moving object in an image is specified based on a cluster determined as overlapping.

Although the invention of the present application has been described above with reference to the example embodiment, the invention of the present application is not limited to the above-described example embodiment. Various changes that can be understood by a person skilled in the art within the scope of the invention of the present application can be made to the configuration and the details of the invention of the present application.

This application is based upon and claims the benefit of priority from Japanese application No. 2022-041142 filed on March 16, 2022, the disclosure of which is incorporated herein in its entirety by reference.

INDUSTRIAL APPLICABILITY

According to present disclosure, it is possible to improve moving-object detection accuracy. The present disclosure is useful for an information processing apparatus for a vehicle that is required to detect a moving object.

REFERENCE SIGNS LIST

| 10 | Moving-object detection apparatus |
| 11 | Feature-point extraction unit |
| 12 | Optical-flow specification unit |
| 13 | Projection processing unit |
| 14 | Background-flow specification unit |
| 15 | Correction processing unit |
| 16 | Clustering unit |
| 17 | Moving-object specification unit |
| 18 | Image acquisition unit |
| 19 | Tracking unit |
| 20 | Moving-object-speed calculation unit |
| 30 | Image-capturing apparatus |
| 31 | Vehicle |
| 32 | Roadside tree |
| 110 | Computer |
| 111 | CPU |
| 112 | Main memory |

113     Storage device
114     Input interface
115     Display controller
116     Data reader/writer
117     Communication interface
118     Input device
119     Display device
120     Recording medium
121     Bus

**Claims**

1. A moving-object detection apparatus comprising:

    feature-point extracting means for extracting feature points from image data output at a preset interval from an image-capturing apparatus attached to a vehicle;
    optical-flow specifying means for specifying, for each of the extracted feature points, an optical flow of the feature point by comparing the latest image data and the image data output further back in the past compared to the latest image data;
    projection processing means for projecting the specified optical flows onto a real-space coordinate system in which the image-capturing apparatus is positioned at an origin;
    background-flow specifying means for specifying, as a background flow, an optical flow of an object constituting a background among the projected optical flows;
    correction processing means for, based on a vector of the background flow, correcting starting-point positions of all of the projected optical flows, and eliminating an optical flow whose length has become equal to or shorter than a predetermined range as a result of the correction;
    clustering means for clustering optical flows that have not been eliminated, based on positions of the optical flows; and
    moving-object specification means for specifying a moving object in the image data using a result of the clustering.

2. The moving-object detection apparatus according to claim 1,
    wherein the correction processing means performs the correction by obtaining a direction and amount of movement of the vehicle based on the vector of the background flow, and moving, by the amount of movement and in a direction opposite the direction of movement, the starting-point positions of all of the projected optical flows.

3. The moving-object detection apparatus according to claim 2 further comprising
    moving-object-speed calculation means for calculating a speed of the moving object using the amount of movement of the vehicle obtained based on the vector of the background flow.

4. The moving-object detection apparatus according to any one of claims 1 to 3 further comprising

    tracking means for, for each cluster obtained as a result of the clustering, determining whether or not a position of the cluster overlaps a position predicted from image data other than the latest image data,
    wherein the moving-object specification means specifies a moving object in an image based on a cluster determined as overlapping.

5. A moving-object detection method comprising:

    extracting feature points from image data output at a preset interval from an image-capturing apparatus attached to a vehicle;
    specifying, for each of the extracted feature points, an optical flow of the feature point by comparing the latest image data and the image data output further back in the past compared to the latest image data;
    projecting the specified optical flows onto a real-space coordinate system in which the image-capturing apparatus is positioned at an origin;
    specifying, as a background flow, an optical flow of an object constituting a background among the projected optical flows;
    based on a vector of the background flow, correcting starting-point positions of all of the projected optical flows, and eliminating an optical flow whose length has become equal to or shorter than a predetermined range as a result of the correction;

clustering optical flows that have not been eliminated, based on positions of the optical flows; and

specifying a moving object in the image data using a result of the clustering.

6. The moving-object detection method according to claim 5,
wherein, in the correcting, correction is performed by obtaining a direction and amount of movement of the vehicle based on the vector of the background flow, and moving, by the amount of movement and in a direction opposite the direction of movement, the starting-point positions of all of the projected optical flows.

7. The moving-object detection method according to claim 6 further comprising
calculating a speed of the moving object using the amount of movement of the vehicle obtained based on the vector of the background flow.

8. The moving-object detection method according to any one of claims 5 to 7 further comprising

for each cluster obtained as a result of the clustering, determining whether or not a position of the cluster overlaps a position predicted from image data other than the latest image data,

wherein, in the specifying of the moving object, a moving object in an image is specified based on a cluster determined as overlapping.

9. A computer readable recording medium that includes a program recorded thereon, the program including instructions that causes a computer to:

extract feature points from image data output at a preset interval from an image-capturing apparatus attached to a vehicle;

specify, for each of the extracted feature points, an optical flow of the feature point by comparing the latest image data and the image data output further back in the past compared to the latest image data;

project the specified optical flows onto a real-space coordinate system in which the image-capturing apparatus is positioned at an origin;

specify, as a background flow, an optical flow of an object constituting a background among the projected optical flows;

based on a vector of the background flow, correct starting-point positions of all of the projected optical flows, and eliminate an optical flow whose length has become equal to or shorter than a predetermined range as a result of the correction;

cluster optical flows that have not been eliminated, based on positions of the optical flows; and

specify a moving object in the image data using a result of the clustering.

10. The computer readable recording medium according to claim 9,
wherein, in the correction, correction is performed by obtaining a direction and amount of movement of the vehicle based on the vector of the background flow, and moving, by the amount of movement and in a direction opposite the direction of movement, the starting-point positions of all of the projected optical flows.

11. The computer readable recording medium according to claim 10,
wherein the program further includes instructions that causes the computer to calculate a speed of the moving object using the amount of movement of the vehicle obtained based on the vector of the background flow.

12. The computer readable recording medium according to any one of claims 9 to 11,

wherein the program further includes instructions that causes the computer to
for each cluster obtained as a result of the clustering, determine whether or not a position of the cluster overlaps a position predicted from image data other than the latest image data,

wherein, in the specification of the moving object, a moving object in an image is specified based on a cluster determined as overlapping.

Fig.1

10

MOVING-OBJECT DETECTION APPARATUS

11

FEATURE-POINT
EXTRACTION UNIT

12

OPTICAL-FLOW
SPECIFICATION UNIT

13

PROJECTION PROCESSING
UNIT

14

BACKGROUND-FLOW
SPECIFICATION UNIT

15

CORRECTION PROCESSING
UNIT

16

CLUSTERING UNIT

17

MOVING-OBJECT
SPECIFICATION UNIT

Fig.2

MOVING-OBJECT DETECTION APPARATUS 10

30

| IMAGE ACQUISITION UNIT | 18 |

| FEATURE-POINT EXTRACTION UNIT | 11 |

| OPTICAL-FLOW SPECIFICATION UNIT | 12 |

| PROJECTION PROCESSING UNIT | 13 |

| BACKGROUND-FLOW SPECIFICATION UNIT | 14 |

| CORRECTION PROCESSING UNIT | 15 |

| CLUSTERING UNIT | 16 |

| TRACKING UNIT | 19 |

| MOVING-OBJECT SPECIFICATION UNIT | 17 |

| MOVING-OBJECT SPECIFICATION UNIT | 20 |

Fig.3

IMMEDIATELY-PRECEDING PAST FRAME

FEATURE POINT 1

FEATURE POINT 2

+

CURRENT FRAME

FEATURE POINT 3

FEATURE POINT 4

↓

FEATURE POINT 1

FEATURE POINT 3

FEATURE POINT 2

OPTICAL
FLOW 1

FEATURE POINT 4

OPTICAL
FLOW 2

19

Fig.4

PROJECTION

Fig.5

VEHICLE IS TRAVELING
STRAIGHT

VEHICLE IS MAKING A RIGHT TURN AT
THE MAXIMUM STEERING ANGLE

VEHICLE IS MAKING A LEFT TURN
AT THE MAXIMUM STEERING ANGLE

◀─────── : OPTICAL FLOW

Fig.6

CORRECTION

BACKGROUND FLOW

Fig.7

CLUSTER BASED ON DISTANCE BETWEEN
OPTICAL FLOWS

GENERATE NEW CLUSTER

Fig.8

START
COORDINATES

END
COORDINATES

HOST VEHICLE
POSITION

PROJECTION TO WORLD COORDINATE SYSTEM

Z

X

WORLD COORDINATE SYSTEM

START
COORDINATES

END
COORDINATES

HOST VEHICLE
POSITION

50km/h

HOST VEHICLE
POSITION

Fig.9

```
           ┌──────────────┐
           │    Start     │
           └──────┬───────┘
                  ▼
  ┌───────────────────────────────────┐    A1
  │ Acquire, in units of frames, image │
  │              data                  │
  └───────────────┬───────────────────┘
                  ▼
  ┌───────────────────────────────────┐    A2
  │ Extract feature points images from │
  │            image data              │
  └───────────────┬───────────────────┘
                  ▼
  ┌───────────────────────────────────┐    A3
  │ Specify optical flow of the feature│
  │              point                 │
  └───────────────┬───────────────────┘
                  ▼
  ┌───────────────────────────────────┐    A4
  │ Project optical flows onto world   │
  │        coordinate system           │
  └───────────────┬───────────────────┘
                  ▼
  ┌───────────────────────────────────┐    A5
  │       Specify background flow      │
  └───────────────┬───────────────────┘
                  ▼
  ┌───────────────────────────────────┐    A6
  │ Correct starting-point positions of│
  │ optical flows and eliminate some   │
  │          optical flows             │
  └───────────────┬───────────────────┘
                  ▼
  ┌───────────────────────────────────┐    A7
  │ Execute clustering of optical flows│
  │    that have not been eliminated   │
  └───────────────┬───────────────────┘
                  ▼
  ┌───────────────────────────────────┐    A8
  │ Determine whether or not position  │
  │ of cluster overlaps a position     │
  │           predicted                │
  └───────────────┬───────────────────┘
                  ▼
  ┌───────────────────────────────────┐    A9
  │       Specify moving bodies        │
  └───────────────┬───────────────────┘
                  ▼
  ┌───────────────────────────────────┐    A10
  │  Calculate speeds of moving OBJECT │
  └───────────────┬───────────────────┘
                  ▼
  ┌───────────────────────────────────┐    A11
  │ Communicate information of moving  │
  │     OBJECT to host vehicle         │
  └───────────────┬───────────────────┘
                  ▼
           ┌──────────────┐
           │     End      │
           └──────────────┘
```

25

Fig.10

COMPUTER

CPU 111

MAIN MEMORY 112

STORAGE DEVICE 113

121

INPUT INTERFACE 114

DISPLAY CONTROLLER 115

DATA READER/ WRITER 116

COMMUNICATION INTERFACE 117

110

INPUT DEVICE 118

DISPLAY DEVICE 119

RECORDING MEDIUM 120

OTHER COMPUTER etc.

## INTERNATIONAL SEARCH REPORT

International application No.

**PCT/JP2023/009085**

### A. CLASSIFICATION OF SUBJECT MATTER

**G06T 7/00**(2017.01)i; **G06T 7/20**(2017.01)i; **G06T 7/215**(2017.01)i
FI:  G06T7/215; G06T7/00 650B; G06T7/20 100

According to International Patent Classification (IPC) or to both national classification and IPC

### B. FIELDS SEARCHED

Minimum documentation searched (classification system followed by classification symbols)

G06T7/00; G06T7/20; G06T7/215

Documentation searched other than minimum documentation to the extent that such documents are included in the fields searched

Published examined utility model applications of Japan 1922-1996
Published unexamined utility model applications of Japan 1971-2023
Registered utility model specifications of Japan 1996-2023
Published registered utility model applications of Japan 1994-2023

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| A | WO 2018/159467 A1 (NEC SOLUTION INNOVATORS, LTD.) 07 September 2018 (2018-09-07) <br> entire text, all drawings | 1-12 |
| A | JP 2018-97776 A (DENSO TEN LTD.) 21 June 2018 (2018-06-21) <br> claim 1 | 1-12 |
| A | WO 2016/151976 A1 (PANASONIC INTELLECTUAL PROPERTY MANAGEMENT CO., LTD.) 29 September 2016 (2016-09-29) <br> paragraphs [0050], [0051] | 1-12 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| | |
|---|---|
| "T" | later document published after the international filing date or priority date and not in conflict with the application but cited to understand the principle or theory underlying the invention |
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **31 March 2023** | **25 April 2023** |

| Name and mailing address of the ISA/JP | Authorized officer |
|---|---|
| **Japan Patent Office (ISA/JP)** <br> **3-4-3 Kasumigaseki, Chiyoda-ku, Tokyo 100-8915** <br> **Japan** | |
| | Telephone No. |

Form PCT/ISA/210 (second sheet) (January 2015)

**INTERNATIONAL SEARCH REPORT**
Information on patent family members

International application No.

**PCT/JP2023/009085**

| Patent document cited in search report | | | Publication date (day/month/year) | Patent family member(s) | | | Publication date (day/month/year) |
|---|---|---|---|---|---|---|---|
| WO | 2018/159467 | A1 | 07 September 2018 | US | 2020/0065615 | A1 | |
| | | | | entire text, all drawings | | | |
| | | | | EP | 3591613 | A1 | |
| JP | 2018-97776 | A | 21 June 2018 | (Family: none) | | | |
| WO | 2016/151976 | A1 | 29 September 2016 | US | 2018/0012068 | A1 | |
| | | | | paragraphs [0056], [0057] | | | |

Form PCT/ISA/210 (patent family annex) (January 2015)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2008097126 A
- JP 2011043922 A

- JP 2022041142 A